# EUROPÄISCHE PATENTSCHRIFT

(11) **EP 1 305 888 B1**
(45) Veröffentlichungstag und Bekanntmachung des Hinweises auf die Patenterteilung: **31.03.2010**
(21) Anmeldenummer: 01957719.6
(22) Anmeldetag: 18.07.2001
(51) Int. Cl.: H04B 1/40

(54) **TDMA-SENDE-/EMPFANGSEINHEIT**
TDMA TRANSCEIVER
UNITE D'EMISSION/RECEPTION A ACCES MULTIPLE PAR REPARTITION DANS LE TEMPS

(30) Priorität: 01.08.2000 DE 10037469
(43) Veröffentlichungstag der Anmeldung: 02.05.2003
(73) Patentinhaber: SIEMENS AKTIENGESELLSCHAFT, 80333 München (DE)
(72) Erfinder: SYDON, Uwe, 40489 Düsseldorf (DE); WAGENER, Henrik, 46399 Bocholt (DE)
(86) Internationale Anmeldenummer: PCT/DE2001/002681
(87) Internationale Veröffentlichungsnummer: WO 2002/011307

(56) Entgegenhaltungen:
- EP-A- 0 969 602
- US-A- 5 930 295
- US-A- 6 091 963
- JOURNAL ARTICLE: 'Software radios' MICROWAVE JOURNAL Bd. 39, Nr. 2, 01 Februar 1996, NORWOOD, MA, US, Seiten 128 - 136, XP000580229

## Beschreibung

Die vorliegende Erfindung bezieht sich auf eine TDMA-Sende-/Empfangseinheit nach dem Obergriff von Patentanspruch 1. Die Erfindung bezieht sich im allgemeinen auf den Einsatz universeller Funkmodule in den Endgeräten verschiedener TDMA-Funksysteme (z.B. GSM, DECT, Bluetooth).

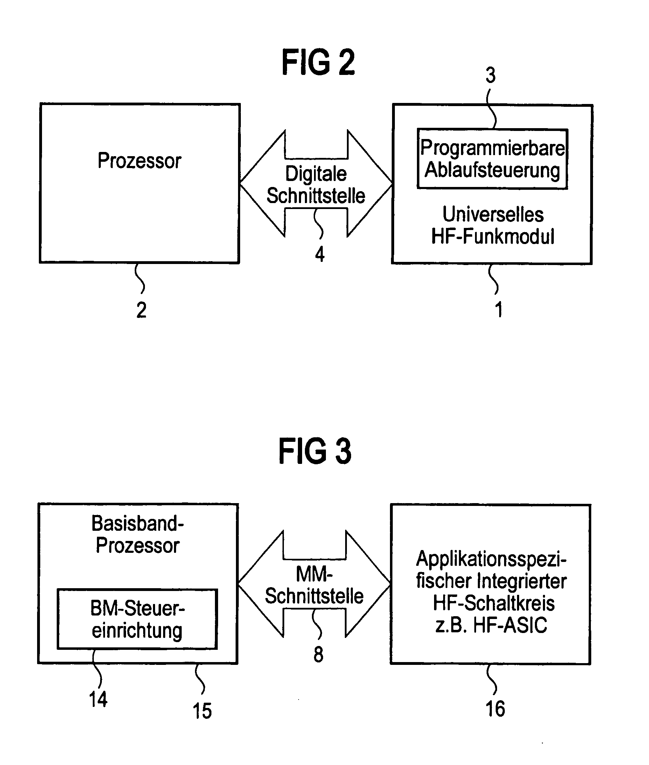

Im Stand der Technik (siehe Figur 3) werden bislang spezielle als "Burst Mode"-Controller bezeichnete BM-Steuereinrichtungen 14 eingesetzt, die im Basisband-Prozessor des Basisband-Blockes 15 als dedizierte hartverdrahtete Logik integriert sind (Standard Specific Control Circuit). Auf der Seite des HF-Funkteils 16 existiert ein Applikationsspezifischer Integrierter HF-Schaltkreis (HF-ASIC) der für ein Funkübertragungsverfahren nach einem speziellen Standard (GSM, DECT, Bluetooth) verantwortlich ist. Der Basisband-Prozessor 15 und das HF-Funkteil 16 sind über eine als "Mixed Mode Interface" bezeichnete MM-Schnittstelle 8 miteinander verbunden, das heißt über analoge und digitale Steuerleitungen.

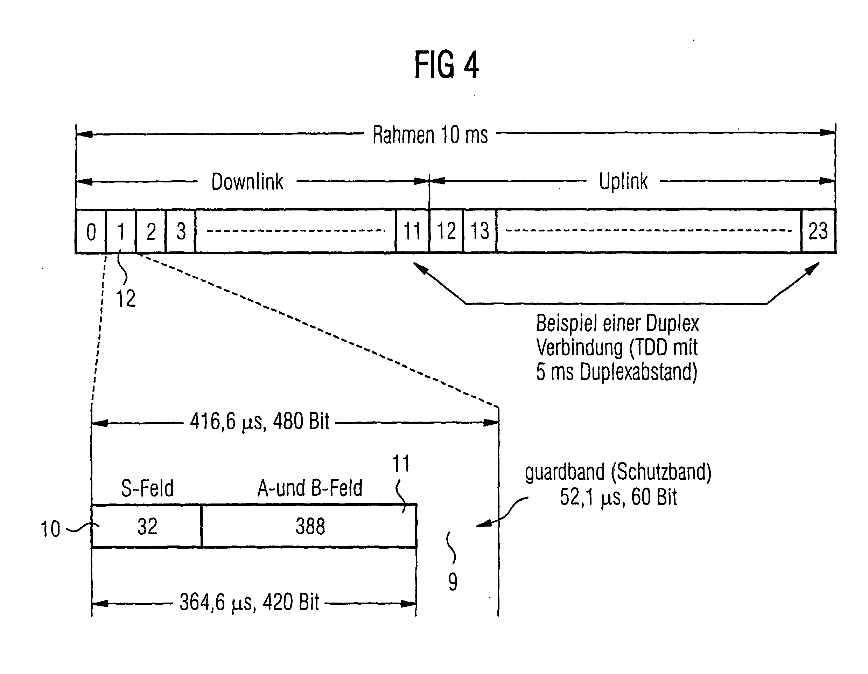

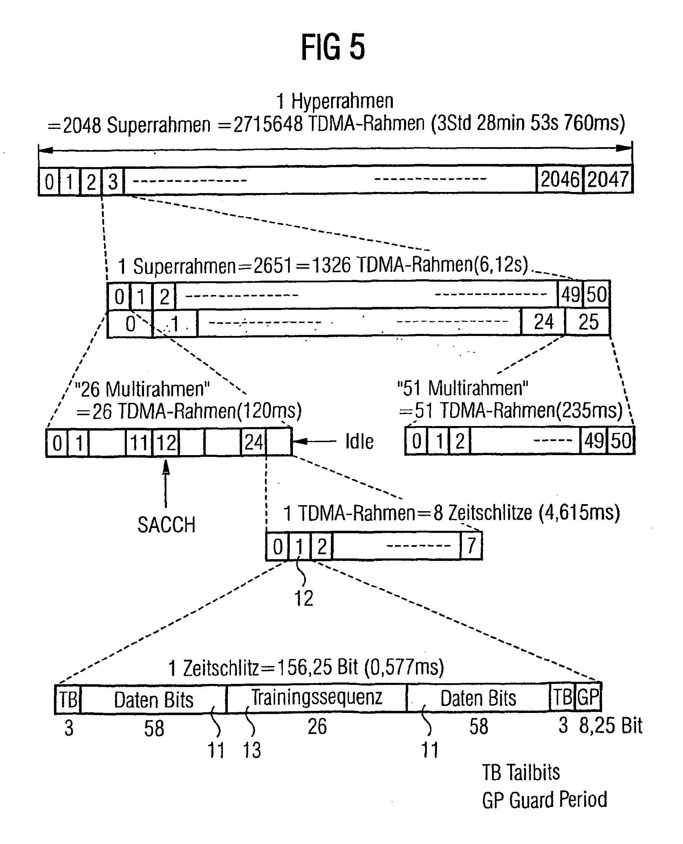

Der Burstmode-Controller 14 ist verantwortlich für alle zeitlichen Abläufe im TDMA-Verfahren. Er soll die spezielle Zeitschlitzausgabe bzw Zeitschlitzabfolge des entsprechenden TDMA-Standards realisieren. Wie diese in den bekannten Verfahren DECT und GSM aussieht, ist in den Figuren 4 und 5 dargestellt.

So verwendet man im GSM-System (Figur 5) Trägerfrequenzen mit jeweils 200 kHz Abstand zueinander, die ihrerseits wieder in je 8 Zeitschlitze (Slots 12) unterteilt sind. Beim europäischen DECT-Standard werden bis zu 10 Frequenzkanäle verwendet, die wiederum in je 12 Zeitschlitze für Up- und Downlink unterteilt sind. Jeder Slot 12 ist in ein Datenfeld für die Nutzlast 11 und ein Feld für Synchronisations- und Signalisierungszwecke 10 unterteilt. Letzteres kann sich direkt am Anfang (Präambel 10) oder in der Mitte (Midambel 13) des Slots 12 befinden. In DECT-Systemen (siehe Figur 4) wird beispielsweise eine Präambel 10 verwendet, wohingegen das GSM-System (Figur 5) eine Midambel 13 benutzt.

Damit es zu keinen Störungen zwischen benachbarten Zeitschlitzen kommt, muß ein entsprechend langes Schutzband 9 (guardband) als einer von zahlreichen Timing-Parametern zwischen den Slots 12 vorgesehen werden. Die jeweiligen Zeitschlitzmasken der betrachteten TDMA-Funksysteme erfordern also unterschiedliche Timing-Parameter, die im Stand der Technik vom Burstmode-Controller 14 spezifiziert werden.

In Anbetracht der Vielzahl der heutigen, sowie der in Planung befindlichen TDMA-Funksysteme (GSM, DECT, Bluetooth, etc. ) erscheint es eine sinnvolle Aufgabe, eine universellere Verwendung von Bauteilen in einem TDMA-Übertragungssystem zu ermöglichen. In dieser Erfindung wird der Ansatz gemacht, in den Endgeräten verschiedener Systeme ein universelles standardunabhängiges Funkmodul einzusetzen.

Zudem ist aus dem Fachartikel "Software Radios" Microwave Journal, 1. Februar 1996 (1996-02-01), Seiten 128 bis 126, Norwood, MA, US, das Design für Basisstationen bekannt, die zum Unterstützen verschiedener Funkstandards geeignet sind. Die Unterstützung von Funkstandards mit verschiedener Modulationsart, einschließlich AMPS, digitales AMPS, CDMA und DCS1800 und PCS1900 wird dadurch erreicht, dass allgemein die Basisstation durch das Laden neuer Software zur Verarbeitung von Signalen nach einem bestimmten Funkstandard aufgerüstet wird.

Diese Aufgabe wird gemäß der Erfindung bei einer TDMA-Sende-/Empfangseinheit durch die Merkmale des Patentanspruchs 1 und insbesondere dadurch gelöst, daß Teile des Burstmode-Controllers in Form einer bezüglich der TDMA-Parameter konfigurierbaren Ablaufsteuerung in das HF-Funkteil verlagert wird. Diese ebenso sich auf Schaltkreisebene befindende aber eben von Außen programmierbare Logik wird also in den HF-Teil eingebunden und ist vom Basisband-Block unabhängig.

Die Schnittstelle zwischen Basisband-Block und HF-Teil wird somit eine rein digitale Schnittstelle.

Das HF-Funkteil und die Ablaufsteuerung können zu einem Funkmodul zusammengefaßt und in einem Chip integriert werden.

Des weiteren kann ein Mobilfunkgerät mit einer solchen TDMA-Sende-/Empfangseinheit ausgestattet werden.

Weitere Vorteile, Merkmale und Eigenschaften der vorliegenden Erfindung werden nun anhand von Ausführungsbeispielen bezugnehmend auf die begleitenden Zeichnungen näher erläutert:
Figur 1 zeigt schematisch die TDMA-Sende-/Empfangseinheit,
Figur 2 zeigt ebenfalls schematisch die TDMA-Sende-/Empfangseinheit,
Figur 3 zeigt schematisch eine TDMA-Sende-/Empfangseinheit nach dem Stand der Technik,
Figur 4 zeigt schematisch die TDMA Zeitschlitz-Struktur des DECT-Standards, und
Figur 5 zeigt schematisch die TDMA Zeitschlitz-Struktur des GSM-Standards.

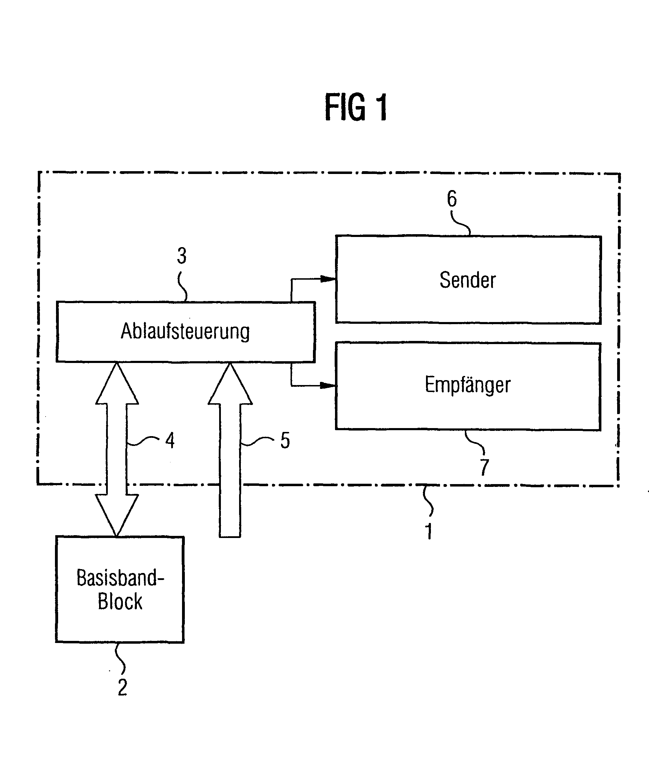

Es gibt heute eine Vielzahl an unterschiedlichen TDMA-Funksystemen (GSM, DECT, Bluetooth), weitere sind in Planung. Diese Tatsache läßt es sinnvoll erscheinen, in den Endgeräten verschiedener Systeme ein universelles Funkmodul, bestehend aus einer universellen Ablaufsteuerung 3 und einem HF-Teil 6,7, einzusetzen, wie es in Figur 1 dargestellt ist.

Wie aus Figur 1 ersichtlich, besteht das TDMA-Sende-/Empfangsteil aus einem HF-Funkmodul 1 und einem Basisband-Block 2. Die Verbindung zwischen Basisband-Block 2 und HF-Funkmodul 1 erfolgt über eine rein digitale Schnittstelle 4. Das HF-Funkmodul 1 setzt sich zusammen aus einem Sender 6 und einem Empfänger 7, dem sogenannten HF-Teil der hier nicht näher betrachtet werden soll, sowie einer programmierbaren Ablaufsteuerung 3, durch die man von Außen die für das jeweilige TDMA-Funksystem spezifischen Vorgaben für die entsprechende Zeitschlitz-Struktur konfigurieren kann.

Der Burstmode-Controller 14 sorgt für die Struktur der jeweiligen Zeitschlitz-Masken 10,11,13 des betrachteten TDMA-Funksystems und ist als hardwarecodierte TDMA-systemspezifische Komponente ein Hindernis auf dem Weg zur Realisierung eines universellen Funkmoduls im Endgerät.

Ein Teil dieses Burstmode-Controllers 14 ist nun in Form der Ablaufsteuerung 3 in das vom Basisband-Controller 14 unabhängige HF-Funkteil 6,7 verlagert worden. Die konfigurierbare Ablaufsteuerung 3 wird somit universell. Dadurch, daß sie von Außen entsprechend des gewünschten Standards programmiert bzw. konfiguriert werden kann, ist man in der Lage durch sie die von der jeweiligen Zeitschlitz-Maske 10,11,13 des betrachteten TDMA-Funksystems erforderlichen Zeitablauf-Parameter zu konfigurieren.

Benötigt wird dabei eine einfache, rein digitale Schnittstelle 4, um die Ablaufsteuerung 3 auszulösen, sowie eine einfache Programmierschnittstelle 5 nach Außen um die Ablaufsteuerung 3 entsprechend dem jeweiligen TDMA-Funksystem zu konfigurieren bzw. zu programmieren.

Sender 6 und Empfänger 7 als der eigentliche Funkteil können mit der Ablaufsteuerung 3 vorteilhafter Weise zu einem Funkmodul 1 zusammengefaßt werden. Ziel dabei ist es, die Ablaufsteuerung 3 und das Funkteil 6,7 in einem Chip zu integrieren.

Figur 2 stellt noch einmal das TDMA-Sende-/Empfangsteil dar. Das universelle HF-Funkmodul 1 enthält eine programmierbare Ablaufsteuerung 3 und ist insgesamt unabhängig vom Basisband-Block 2 der den Basisband-Prozessor enthält. Beide Einheiten sind über eine digitale Schnittstelle 4 verbunden.

## Patentansprüche

1. TDMA-Sende-/Empfangseinheit, aufweisend einen Basisband-Block (2) und ein Funkmodul (1), wobei der Basisband-Block (2) und das Funkmodul (1) durch eine Schnittstelle (4) verbunden sind und ein Burstmode-Controller (14) für die Struktur jeweiliger Zeitschlitz-Masken (10, 11, 13) vorgesehen ist,
**dadurch gekennzeichnet,**
**dass** der Basisband-Block (2) standardunabhängig ist, indem das Funkmodul (1) eine bezüglich der TDMA-Parameter konfigurierbare Ablaufsteuerung (3), die einen Teil des Burstmode-Controllers (14) bildet, sowie einen HF-Funkteil (6, 7) aufweist, wobei der HF-Funkteil (6, 7) einen Sender (6) und einen Empfänger (7) aufweist und wobei die Ablaufsteuerung (3) mittels der Schnittstelle (4) mit dem Basisband-Block (2) verbunden ist.

2. TDMA-Sende-/Empfangseinheit nach Anspruch 1,
**dadurch gekennzeichnet,**
**daß** die Ablaufsteuerung (3) vom Basisband-Block (2) unabhängig ist.

3. TDMA-Sende-/Empfangseinheit nach Anspruch 1 oder 2,
**dadurch gekennzeichnet,**
**daß** die Ablaufsteuerung (3) von Außen programmierbar ist.

4. TDMA-Sende-/Empfangseinheit nach einem der Ansprüche 1,2 oder 3,
**dadurch gekennzeichnet,**
**daß** die Schnittstelle (4) eine digitale Schnittstelle ist.

5. TDMA-Sende-/Empfangseinheit nach einem der vorhergehenden Ansprüche,
**dadurch gekennzeichnet,**
**daß** das HF-Funkteil (6,7) und die Ablaufsteuerung (3) zu einem Funkmodul (1) zusammengefaßt werden können.

6. TDMA-Sende-/Empfangseinheit nach einem der vorhergehenden Ansprüche,
**dadurch gekennzeichnet,**
**daß** das HF-Funkteil (6,7) und die Ablaufsteuerung (3) in einem Chip integriert werden können.

7. Mobilfunkgerät aufweisend eine TDMA-Sende-/Empfangseinheit nach einem der vorherigen Ansprüche.

## Claims

1. TDMA transceiver exhibiting a baseband block (2) and a radio module (1), the baseband block (2) and the radio module (1) being connected by an interface (4) and a burst mode controller (14) being provided for the structure of the respective time slot masks (10, 11, 13), **characterized in that** the baseband block (2) is standard-independent, **in that** the radio module (1) exhibits a sequence control (3), which forms part of the burst mode controller (14), and which can be configured with respect to the TDMA parameters, and an RF radio section (6, 7), the RF radio section (6, 7) exhibiting a transmitter (6) and a receiver (7) and the sequence control (3) being connected to the baseband block (2) by means of the interface (4).

2. DMA transceiver according to Claim 1, **characterized in that** the sequence control (3) is independent of the baseband block (2).

3. TDMA transceiver according to Claim 1 or 2, **characterized in that** the sequence control (3) can be programmed from the outside.

4. TDMA transceiver according to one of Claims 1, 2 or 3, **characterized in that** the interface (4) is a digital interface.

5. TDMA transceiver according to one of the preceding claims, **characterized in that** the RF radio section (6,7) and the sequence control (3) can be combined to form one radio module (1).

6. TDMA transceiver according to one of the preceding claims, **characterized in that** the RF radio section (6,7) and the sequence control (3) can be integrated in one chip.

7. Mobile radio device exhibiting a TDMA transceiver according to one of the preceding claims.

## Revendications

1. Unité d'émission/réception à accès multiple par répartition dans le temps (AMRT), présentant un bloc de bande de base (2) et un module radio (1), le bloc de bande de base (2) et le module radio (1) étant reliés par une interface (4) et un contrôleur de mode rafale (14) étant prévu pour la structure de masques à créneau temporel (10, 11, 13) respectifs,
**caractérisée en ce que**
le bloc de bande de base (2) est indépendant du standard, du fait que le module radio (1) présente une commande séquentielle (3) configurable en ce qui concerne les paramètres AMRT, qui forme une partie du contrôleur de mode rafale (14), ainsi qu'une partie radio HF (6, 7), la partie radio HF (6, 7) présentant un émetteur (6) et un récepteur (7) et la commande séquentielle (3) étant reliée au moyen de l'interface (4) au bloc de bande de base (2).

2. Unité d'émission/réception AMRT selon la revendication 1,
**caractérisée en ce que**
la commande séquentielle (3) est indépendante du bloc de bande de base (2).

3. Unité d'émission/réception AMRT selon la revendication 1 ou 2,
**caractérisée en ce que**
la commande séquentielle (3) est programmable de l'extérieur.

4. Unité d'émission/réception AMRT selon l'une quelconque des revendications 1, 2 ou 3,
**caractérisée en ce que**
l'interface (4) est une interface numérique.

5. Unité d'émission/réception AMRT selon l'une quelconque des revendications précédentes,
**caractérisée en ce que**
la partie radio HF (6, 7) et la commande séquentielle (3) peuvent être groupées en un module radio (1).

6. Unité d'émission/réception AMRT selon l'une quelconque des revendications précédentes,
**caractérisée en ce que**
la partie radio HF (6, 7) et la commande séquentielle (3) peuvent être intégrées dans une puce.

7. Appareil de téléphonie mobile présentant une unité d'émission/réception AMRT selon l'une quelconque des revendications précédentes.
